# EUROPÄISCHE PATENTSCHRIFT

(11) **EP 0 538 919 B1**
(45) Veröffentlichungstag und Bekanntmachung des Hinweises auf die Patenterteilung: **11.09.1996**
(21) Anmeldenummer: 92202885.7
(22) Anmeldetag: 21.09.1992
(51) Int. Cl.: G11B 5/008, G11B 5/09, G11B 20/10, G11B 20/22

(54) **Magnetband-Aufzeichnungsgerät**
Magnetic tape recording apparatus
Appareil d'enregistrement à bande magnétique

(30) Priorität: 26.09.1991 DE 4132004
(43) Veröffentlichungstag der Anmeldung: 28.04.1993
(73) Patentinhaber: BTS BROADCAST TELEVISION SYSTEMS GMBH, D-64347 Griesheim (DE); Philips Electronics N.V., 5621 BA Eindhoven (NL)
(72) Erfinder: Pehl, Hermann-Josef, W-6100 Darmstadt (DE)
(74) Vertreter: von Laue, Hanns-Ulrich, Dipl.-Ing.

(56) Entgegenhaltungen:
- GB-A- 2 061 674
- PATENT ABSTRACTS OF JAPAN vol. 15, no. 305 (P-1234) 5. August 1991 & JP-A-31 08 116

## Beschreibung

Die Erfindung geht aus von einem Magnetband-Aufzeichnungsgerät nach dem Oberbegriff des Patentanspruchs 1.

Das Frequenzspektrum eines rechteckförmig verlaufenden Datensignals weist Spektralanteile auf, die sich bis ins Unendliche erstrecken. Um ein solches Datensignal unverzerrt zu übertragen, wird ein Übertragungskanal mit unendlicher Bandbreite benötigt. Ein Übertragungskanal mit induktiver Kupplung verfügt jedoch nicht über eine derartige Bandbreite. So weist beispielsweise der Übertragungskanal einer rotierenden Abtasteinrichtung für Videomagnetbandgeräte lediglich einen Bandpaßcharakter auf, wobei eine obere und untere Grenzfrequenz wesentlich von dem Übertragungsverhalten eines rotierenden Transformators abhängt.

Aus der DE 30 45 544 A1 ist eine Vorrichtung zur Aufzeichnung digitaler Signale auf Magnetband bekannt, die einen bandführenden Stator, einem relativ zu diesem beweglich angeordneten, wenigstens einen Aufzeichnungsmagnetkopf enthaltenden Rotor und Schaltmittel zur berührungslosen Übertragung der digitalen Signale vom Stator auf den Rotor enthält. Auf der Rotorseite ist zwischen dem Aufzeichnungsmagnetkopf und den Schaltmitteln eine Schaltungsanordnung zur Wiedergewinnung des durch die induktive Kopplung verlorengegangenen Gleichspannungsanteils, z.B. eine Klemmschaltung, angeordnet. Ferner ist auf der Rotorseite einer aus einer ersten und zweiten Stromquelle bestehender Stromschalter angeordnet, der der Klemmschaltung nachgeschaltet ist und einen Aufzeichnungsmagnetkopf angesteuert.

Weiterhin ist aus der US-Patentschrift 4,561,027 eine Anordnung für ein magnetisches Aufzeichnungsgerät bekannt, bei der die Flankeninformation eines Datensignals sowie ein dem Datensignal zugeordnetes Taktsignal über zwei rotierende Transformatoren übertragen werden. Auf der Rotorseite der rotierenden Transformatoren wird aus der übertragenen Flankeninformation das Datensignal zurückgewonnen, das nachfolgend in das Zeitraster des parallel übertragenen Taktsignals gestellt wird.

Ferner ist aus der Druckschrift A.T.R., Vol. 11, No. 2, 1977, Seiten 14 bis 27, ein Verfahren zur Kodierung eines PCM- Signals für eine leitungsgebundene Übertragungsstrecke bekannt, bei welchem ein PCM-Signal einem Koder zugeführt ist, welcher aus einem Modulo-2-Addierer, einer Verzögerungseinrichtung und einem arithmetischen Addierer besteht. Dabei wird ein am Ausgang des Modulo-2-Addierers abnehmbares Datensignal in der Verzögerungseinrichtung verzögert und auf einen Eingang des Modulo-2-Addierers zurückgekoppelt. In dem arithmetischen Addierer wird das von der Verzögerungseinrichtung abgegebene Signal mit umgekehrten Vorzeichen zu dem von dem Modulo-2-Addierer abgegebenen Signal addiert. Die am Ausgang des arithmetischen Addierers erhaltene bipolare Sequenz wird der leitungsgebundenen Übertragungsstrecke zugeführt. An der Empfängerseite kann mittels Gleichrichtung des empfangenen Signals eine Taktinformation im Signal zurückgewonnen werden.

Außerdem ist aus der GB 2.061.674 Al ein Verfahren zur magnetischen Aufzeichnung und Wiedergabe eines Digitalsignals bekannt, bei welchem ein anliegendes binäres Digitalsignal mittels eines Prekoders in ein Zwischensignal umgewandelt wird. Der Prekoder besteht aus einer Verzögerungsstufe zur Verzögerung des anliegenden Digitalsignals um zwei Taktperioden sowie einem Modulo-2-Addierer, in welchem das anliegende Digitalsignal und das verzögerte Signal addiert werden. Das am Ausgang des Modulo-2-Addierers abnehmbare Zwischensignal wird nachfolgend um die Dauer einer Taktperiode verzögert und von dem nicht verzögerten Zwischensignal subtrahiert und mit einem Videoaufzeichnungsgerät auf Magnetband aufgezeichnet. Im Wiedergabebetrieb wird das vom Magnetband abgenommene Signal um die Dauer einer Taktperiode verzögert und zu dem unverzögerten Signal additiv zugesetzt. Aus dem so erzeugten Signal wird durch Diskrimination das ursprüngliche Digitalsignal zurückgewonnen. Das bekannte Verfahren weist den Nachteil auf, daß das auf dem Magnetband aufgezeichnete Signal nicht mehr zu dem anliegenden Digitalsignal kompatibel ist. Es ist daher nicht möglich, ein nach diesem bekannten Verfahren aufgezeichnetes Signal mit Magnetbandgeräten wiederzugeben, die für einen von diesem Aufzeichnungsformat abweichenden Standard ausgelegt sind.

Schließlich ist aus der DE 33 46 745 A1 ein Verfahren zur magnetischen Aufzeichnung und Wiedergabe von Signalen nach dem Teileinschwingverfahren (partial-response) bekannt. Bei diesem Verfahren wird ein PCM-Signal über einen Umsetzer (Exklusiv- Oder-Verknüpfung) und eine Verzögerungseinrichtung geleitet. Das verzögerte Ausgangssignal der Verzögerungseinrichtung wird zum Umsetzer zurückgeführt, so daß in dem Umsetzer eine Modulo-2-Addition durchgeführt werden kann. Ein auf diese Weise erhaltenes unipolares Digitalsignal wird unmittelbar danach mit einem Aufsprechverstärker verstärkt und von einem Magnetkopf auf Magnetband aufgezeichnet. Das aufgezeichnete Digitalsignal wird auf der Wiedergabeseite mit einem Wiedergabemagnetkopf von dem Magnetband abgenommen, verstärkt und entzerrt. Aufgrund des differenzierenden Übertragungsverhaltens des Kopf-Band-Systems nimmt das entzerrte Wiedergabesignal drei verschiedne Werte an ("+1", "0", "-1"), die in einer aufwendigen Schwellenwertregelschaltung wieder in das ursprüngliche PCM-Signal umgewandelt werden.

Der vorliegenden Erfindung liegt die Aufgabe zugrunde, ein Magnetband-Aufzeichnungsgerät nach der eingangs genannten Art anzugeben, welches die übertragungsbedingten Signalverzerrungen durch eine induktiv gekoppelte Übertragungsstrecke weitgehend beseitigt.

Diese Aufgabe wird durch die im kennzeichnenden Teil des Patentanspruchs 1 angegebenen Merkmale gelöst.

Das Erfindung gemäß dem Patentanspruchs 1 hat den Vorteil, daß durch Anwendung einer Vor-Codierung das Frequenzspektrum des zu übertragenden Datensignals an das Übertragungsverhalten Stator-Rotor-Übertragungsstrecke angepaßt werden kann, so daß insbesondere die in einem Datensignal enthaltenen Gleichspannungskomponenten nicht verlorengehen, wobei außerdem das auf Magnetband aufgezeichnete Datensignal hinsichtlich der Codierung und Form unverändert bleibt und ein bestehender Aufzeichnungsstandard nicht verletzt wird.

Ein Ausführungsbeispiel der Erfindung ist in der Zeichnung dargestellt und in der nachfolgenden Beschreibung näher erläutert. Es zeigen:
- Fig. 1: eine Schaltungsanordnung zum Aufzeichnen eines Datensignals auf Magnetband nach dem Stand der Technik,
- Fig. 2: Spannungszeitdiagramme zur Erläuterung der in der Fig. 1 dargestellten Schaltungsanordnung,
- Fig. 3: eine erfindungsgemäße Schaltungsanordnung zum Aufzeichnen eines Datensignals auf Magnetband und
- Fig. 4: Spannungszeitdiagramme zur Erläuterung der in der Fig. 3 dargestellten Schaltungsanordnung.

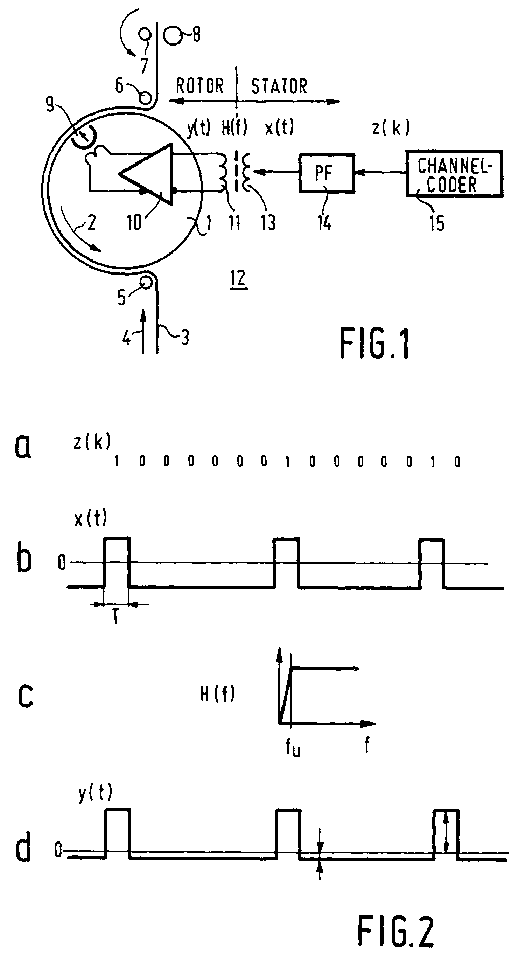

In der Fig. 1 bezeichnet 1 einen Drehkörper, welcher in Richtung eines Pfeiles 2 rotiert. Der Drehkörper 1 kann beispielsweise die rotierende Kopfradscheibe einer (nicht dargestellten) Abtasteinrichtung sein, die von einem Magnetband 3 wendelförmig umschlungen wird. Das Magnetband 3 wird in eine Richtung 4 vorgeschoben und dabei von zwei Führungselementen 5 und 6 geführt. Der Vorschub des Magnetbandes 3 erfolgt durch eine Antriebswelle 7 in Verbindung mit einer Gummiandruckrolle 8. Am Umfang des Drehkörpers 1 sind mehrere Magnetköpfe befestigt, von denen aus Gründen der Übersichtlichkeit nur ein Aufzeichnungsmagnetkopf 9 dargestellt ist. Der Aufzeichnungsmagnetkopf 9 wird durch einen auf dem rotierenden Drehkörper 1 angeordneten Aufsprechverstärker 10 angesteuert. Der Eingang des Aufsprechverstärkers 10 ist mit einer Rotorwicklung 11 eines rotierenden Transformators 12 verbunden. Die Rotorwicklung 11 ist ebenso wie der Aufsprechverstärker 10 auf dem Drehkörper befestigt. Ein auf das Magnetband 3 aufzuzeichnendes Datensignal wird von einer feststehenden Statorwicklung 13 des rotierenden Transformators 12 auf die sich drehende Rotorwicklung 11 übertragen. Das Datensignal wird von dem Ausgang eines Impulsfilters 14 abgenommen, welches von einer in einem Kanal-Coder 15 erzeugten kanalcodierten Datenfolge angesteuert wird.

Zur Erläuterung der Wirkungsweise dieser bekannten Anordnung sei angenommen, daß am Ausgang des Kanal-Coders 15 eine kanalcodierte Datenfolge z(k) nach Fig. 2a liegt, die einen hohen Gleichspannungsanteil aufweist. Das Impulsfilter 14 formt diese kanalcodierte Datenfolge z(k) in ein Datensignal x(t) (Fig. 2b) um. Im einfachsten Fall kann das Impulsfilter 14 aus einem D-Flip-Flop bestehen, welches die kanalcodierte Datenfolge der Fig. 2a in Abhängigkeit eines zugehörigen Taktes T übernimmt. Die Null-Linie in diesem Datensignal x(t) befindet sich in der Mitte von zwei logischen Spannungspegeln ("0" und "1"). Der rotierende Transformator 12 weist den in der Fig. 2c dargestellten idealisierten Frequenzgangverlauf H(f) auf. Danach können ab einer unteren Grenzfrequenz fu niederfrequente Signalanteile nur noch gedämpft bzw. gar nicht mehr übertragen werden. Aufgrund dieses Übertragungsverhaltens verschiebt sich die Null-Linie des zu übertragenden Datensignals x(t), so daß sich der in der Fig. 2d dargestellte Null-Linien-Verlauf des Datensignals y(t) einstellt. Da der auf dem Drehkörper 1 angeordnete Aufsprechverstärker 10 das zugeführte Datensignal y(t) linear verstärkt, reichen die negativen Signalanteile des Datensignals y(t) nicht aus, um das Magnetband 3 vollständig durchzumagnetisieren. Das Datensignal wird nicht fehlerfrei aufgezeichnet.

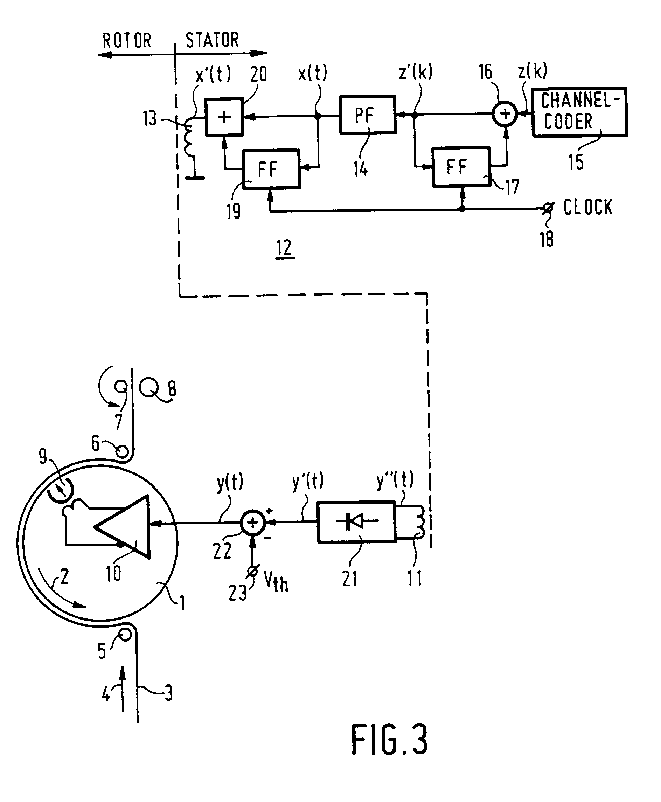

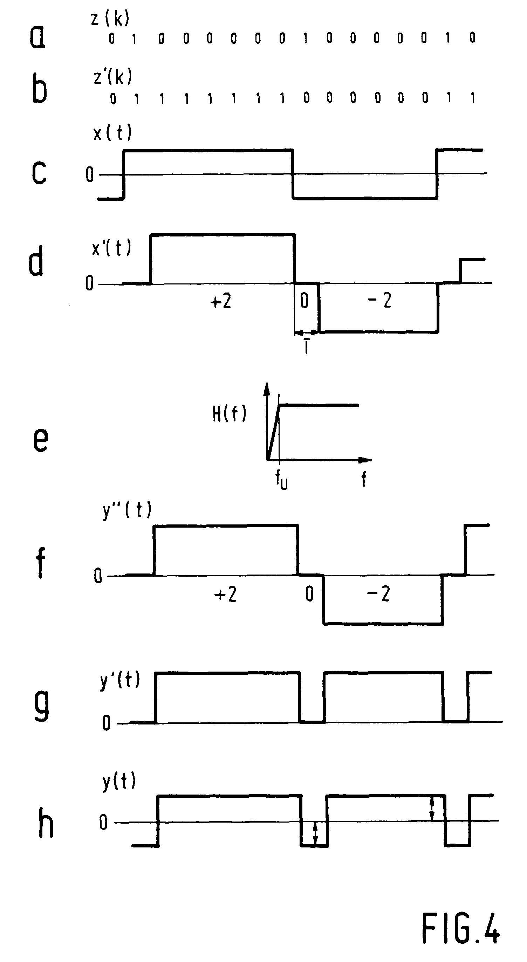

Die Fig. 3 zeigt eine Schaltungsanordnung, die die in Verbindung mit der Fig. 1 und 2 beschriebenen Nachteile hinsichtlich der fehlerhaften Übertragung des Gleichspannungsanteils nicht aufweist. In der Fig. 3 sind diejenigen Teile, die Teilen der Fig. 1 entsprechen, mit denselben Bezugszeichen versehen. Im Gegensatz zu der in der Fig. 1 dargestellten Schaltungsanordnung wird in der Fig. 3 die von dem Kanal-Coder 15 abgegebene kanalcodierte Datenfolge z(k) nicht direkt dem Impulsfilter 14 zugeleitet, sondern über ein Exklusiv-Oder 16. Ein am Ausgang des Exklusiv-Oders 16 abnehmbares Signal z'(k) wird in einer ersten Verzögerungsstufe 17 um eine Taktperiode T eines an einer Klemme 18 liegenden Taktsignals verzögert und auf einen anderen Eingang des Exklusiv-Oders 16 zurückgeführt. Das Exklusiv-Oder 16 bewirkt eine Modulo-2-Addition der kanalcodierten Datenfolge z(k) mit der um eine Taktperiode verzögerten kanalcodierten Datenfolge. Zur Verdeutlichung dieses Zusammenhangs ist in der Fig. 4a noch einmal die in Zusammenhang mit der Fig. 2a dargestellte kanalcodierte Datenfolge z(k) dargestellt. Die Fig. 4b zeigt die durch die Modulo-2-Addition abgeleitete Datenfolge z'(k). Durch Impulsfilterung in dem Impulsfilter 14 wird das in der Fig. 4c entsprechende Datensignal x(t) erzeugt, dessen Null-Linie in Spannungsmitte der beiden logischen Spannungspegel ("0" und "1") verläuft. Nachfolgend wird das Datensignal x(t) in einer zweiten Verzögerungsstufe 19 ebenfalls um eine Taktperiode T des an Klemme 18 liegenden Taktsignals verzögert und in einer Addierstufe 20 mit negativen Vorzeichen dem unverzögerten Datensignal x(t) zugesetzt, so daß sich der in der Fig. 4d dargestellte Verlauf eines Signals x'(t) ergibt. Das Signal x'(t) ist ein ternäres Signal mit den Pegeln "+2", "0" und "-2". Der Pegel der strichpunktiert gezeichneten Null-Linie entspricht dem "0"-Pegel des ternären Signals x'(t), in welchem eine logische Null ("0") dem Spannungspegel "0" und eine logische Eins ("1") den Spannungspegeln "-2" oder "+2" entspricht.

Das derart aufbereitete Datensignal x'(t) wird über die Statorwicklung 13 des rotierenden Transformators 12 zu der auf der Rotorseite befindlichen Rotorwicklung 11 übertragen und dort mit einem Gleichrichter 21 gleichgerichtet. Am Eingang des Gleichrichters 21 liegt das vom Amplitudenfrequenzgang H(f) (Fig. 4e) des rotierenden Transformators 12 nahezu unbeeinflußte Signal y''(t) mit den drei Spannungspegeln "+2", "0" und "-2". Durch die Gleichrichtung in der Gleichrichterstufe 21 werden die im ternären Signal enthaltenen "-2"-Pegel oberhalb der strichpunktierten Null-Linie geklappt, so daß sich der in der Fig. 4g dargestellte Signalverlauf für ein Signal y'(t) am Ausgang der Gleichrichterstufe 21 ergibt. Anschließend wird in einer Addierstufe 22 mit umgekehrtem Vorzeichen eine an einer Klemme 23 zugeführte Spannung Vth dem erhaltenen Signal y'(t) zugesetzt. Durch diese Gleichspannungsverschiebung wird die Null-Linie wieder in die Mitte des bipolaren Signals geschoben und somit ein Datensignal y(t) (Fig. 4h) erzeugt wird, das den Aufsprechverstärker 10 sowohl in positiver als auch negativer Richtung symmetrisch aussteuert.

Die zwischen der Statorwicklung 13 des rotierenden Transformators 12 und dem Impulsfilter 14 angeordneten Schaltungsteile bilden ein Vorfilter zur Erzeugung einer gleichspannungsfreien Impulsform. Da jedoch diese Impulsform von Nachbarimpulsen beeinflußt wird, ist zwischen dem Impulsfilter 14 und dem Kanalcoder 15 ein Vor-Coder zwischengeschaltet, der diese Nachbarzeichenstörungen aufhebt.

Es sei hier noch mitgeteilt, daß der aus den Elementen 16 und 17 aufgebaute Prokoder nicht essentiell ist und von der Art des Aufzeichnungsverfahrens abhängt. So könnt auch ein Prekoder mit einer 2-Bit-Verzögerungsleitung verwendet werden. Im allgemeinen kann man den Prekoder als Teil des Kanalkoders ansehen. Für die verschiedenen Anwendungen eines Prekoders sei z.B. verwiesen auf den Artikel "A Study on Detection Methods of NRZ Recording" von S. Nakagawa et al, IEEE Transactions on Magnetics, Vol. MAG-16, No. 1, January 1980, Seiten 104 bis 110, insbesondere Fig. 8.

## Patentansprüche

1. Magnetband-Magnetband-Aufzeichnungsgerät zum Aufzeichnen von Datensignalen auf Magnetband (3), enthaltend:
eine rotierende Abtasteinrichtung (1) mit mindestens einem Aufsprech-Magnetkopt (9) und mit einer induktiven Übertragungseinrichtung (12) zur Übertragung der aufzuzeichnenden Datensignale zu dem Aufsprech-Magnetkopf (9), wobei die Übertragungseinrichtung (12) aus einer Statorwicklung (13) und einer auf der Rotorseite der induktiven Übertragungseinrichtung angeordneten Rotorwicklung (11) besteht,
eine Eingangsklemme zum Empfangen der aufzuzeichnenden Datensignale und
eine Kodiereinrichtung mit einem Eingang und einem Ausgang, wobei der Eingang der Kodiereinrichtung mit der Eingangsklemme und der Ausgang der Kodiereinrichtung mit der Statorwicklung (13) gekoppelt ist, welche Kodiereinrichtung eine Verzögerungseinrichtung (19) zur Verzögerung der aufzuzeichnenden Datensignale um die Dauer einer Bitperiode im Datensignal sowie eine Signalkombinierstufe (20) zum Kombinieren der verzögerten und der unverzögerten Datensignale zum Erhalt eines ternären Ausgangssignals enthält,
**gekennzeichnet durch**
eine auf der Rotorseite der rotierenden Abtasteinrichtung (1) angeordnete Gleichrichterstufe (21), deren Eingang mit der Rotorwicklung (11) gekoppelt ist und welche zur Gleichrichtung eines an der Rotorwicklung (11) abnehmbaren ternären Ausgangssignals vorgesehen ist.

2. Magnetband-Aufzeichnungsgerät nach Anspruch 1, dadurch gekennzeichnet, daß die Signalkombinierstufe (20) zum Addieren oder zum Subtrahieren der um eine Bitperiode verzögerten und unverzögerten Datensignale eingerichtet ist.

3. Magnetband-Aufzeichnungsgerät nach Anspruch 1 oder 2, dadurch gekennzeichnet, daß der Kodiereinrichtung eine Prekoderstufe (16, 17) mit einer Modulo-2-Addierstufe (16) und einer Verzögerungseinrichtung (17) vorgeschaltet ist, wobei die Verzögerungseinrichtung (17) das an einem Eingang liegende Datensignal um die Dauer einer Bitperiode im Datensignal verzögert, wobei ein Eingang der Prekoderstufe (16, 17) mit einem ersten Eingang der Modulo-2-Addierstufe (16) verbunden ist, wobei ein zweiter Eingang der Modulo-2-Addierstufe (16) mit einem Ausgang der Verzögerungseinrichtung (17) verbunden ist und wobei ein Ausgang des Modulo-2-Addierstufe (16) mit einem Eingang der Verzögerungseinrichtung (17) und einem Eingang der Kodiereinrichtung (14, 19, 20) verbunden ist.

4. Magnetband-Aufzeichnungsgerät nach einem vorhergehenden Ansprüche 1, 2 oder 3, gekennzeichnet durch eine auf der Rotorseite der rotierenden Abteinrichtungseinrichtung (1) angeordnete Addierstufe (22), welche eine Gleichspannung (Vₜₕ) zu dem Ausgangssignal der Gleichrichterstufe (21) addiert.

## Claims

1. A magnetic tape recording device for recording digital data signals on magnetic tape (3), comprising:
a rotary scanning device (1) comprising at least one magnetic recording head (9) and an inductive transmission device (12) for transmitting the data signals to be recorded to the magnetic recording head (9), the transmission device (12) comprising a stator winding (13) and a rotor winding (11) arranged at the rotor side of the inductive transmission devicw (12),
an input terminal for receiving the data signal to be recorded,
a coding device having an input and an output, the input of the coding device being coupled to the input terminal and the output of the coding device being coupled to to the stator winding (13), which coding device comprises a delay device (19) for delaying the data signals to be recorded by the duration of one bit period in the data signal, and a signal combining stage (20) for combining the delayed and the undelayed data signals so as to obtain a ternary output signal,
characterized by
a rectifier stage (21) arranged at the rotor side of the rotary scanning device (1) and having an input coupled to the rotor winding (11) in order to rectify a ternary output signal available across the rotor winding (11).

2. A magnetic tape recording apparatus as claimed in Claim 1, characterized in that the signal combining stage (20) is adapted to add or to subtract the data signal delayed by one bit period and the undelayed data signal.

3. A magnetic tape recording apparatus as claimed in Claim 1 or 2, characterized in that a precoder stage (16, 17) is arranged before the coding device, which precoder stage comprises a modulo-2 adder stage (16) and a delay device (17), which delay device delays the data signal applied to an input by the duration of one bit period in the data signal, an input of the precoder stage (16, 17) being coupled to a first input of the modulo-2 adder stage (16), a second input of the modulo-2 adder stage (16) being coupled to an output of the delay device (17), and an output of the modulo-2 adder stage (16) being connected to an input of the delay device (17) and to an input of the coding device (14, 19, 20).

4. A magnetic tape recording apparatus as claimed in any one of the Claims 1, 2 or 3, characterized by an adder stage (22) arranged at the rotor side of the rotary scanning device (1), which adder stage adds a direct voltage (Vₜₕ) to the output signal of the rectifier stage (21).

## Revendications

1. Enregistreur à bande magnétique pour l'enregistrement de signaux de données sur bande magnétique (3), comprenant :
un dispositif de balayage rotatif (1) avec au moins une tête magnétique d'enregistrement (9) et un dispositif de transmission inductif (12) pour la transmission des signaux de données à enregistrer à la tête magnétique d'enregistrement (9), le dispositif de transmission (12) se composant d'une bobine de stator (13) et d'une bobine de rotor (11) disposée côté rotor du dispositif de transmission inductif,
une borne d'entrée pour la réception des signaux de données à enregistrer, et
un dispositif de codage avec une entrée et une sortie, l'entrée du dispositif de codage étant couplée à la borne d'entrée et la sortie du dispositif de codage à la bobine du stator (13), lequel dispositif de codage contient un dispositif retardateur (19) pour retarder les signaux de données à enregistrer d'une durée d'une période binaire dans le signal de données ainsi qu'un étage de combinaison de signaux pour la combinaison des signaux de données retardés et non retardés pour obtenir un signal de sortie ternaire,
caractérisé par
un étage redresseur (21) disposé sur le côté rotor du dispositif de balayage rotatif (1) dont l'entrée est couplée à la bobine de rotor (11) et qui est prévu pour le redressement d'un signal de sortie ternaire à prélever à la bobine de rotor (11).

2. Enregistreur à bande magnétique selon la revendication 1, caractérisé en ce que l'étage de combinaison des signaux (20) est prévu pour l'addition ou la soustraction des signaux de données retardés et non retardés d'une période binaire.

3. Enregistreur à bande magnétique selon la revendication 1 ou 2, caractérisé en ce qu'un étage précodeur (16, 17) avec un étage additionneur modulo-2 (16) et un dispositif retardateur (17) sont montés en amont du dispositif de codage, le dispositif retardateur (17) retardant le signal de données appliqué à l'entrée de la durée d'une période binaire d'un signal de données, une entrée de l'étage du précodeur (16, 17) étant reliée à la première entrée de l'étage additionneur modulo-2 (16), une deuxième entrée de l'étage additionneur modulo-2 (16) étant reliée à une sortie du dispositif retardateur (17) et une sortie de l'étage additionneur modulo-2 (16) étant reliée à une entrée du dispositif retardateur (17) et à une entrée du dispositif de codage (14, 19, 20).

4. Enregistreur à bande magnétique selon l'une des revendications précédentes 1, 2, ou 3, caractérisé par un étage additionneur (22) disposé sur le côté rotor du dispositif de balayage rotatif (1) qui additionne une tension continue (Vₜₕ) au signal de sortie de l'étage redresseur (21).
